# EUROPEAN PATENT APPLICATION

(11) **EP 1 041 302 A1**
(43) Date of publication of application: **04.10.2000**
(21) Application number: 99104950.3
(22) Date of filing: 12.03.1999
(51) Int. Cl.: F16C 1/22

(54) **A connector device for retaining and adjusting the tension of an elongate body, particularly a flexible control cable**

(71) Applicant: SILA HOLDING INDUSTRIALE S.r.l., 10121 Torino (IT)
(72) Inventor: Lomagno, Mauro, 10060 Frossasco (Torino) (IT)
(74) Representative: Cian, Paolo

(57) **Abstract**

A connector device for retaining and adjusting the tension of an elongate body, particularly a flexible control cable, with respect to a movable member, comprises a connector portion (11) for connection with the movable member and a sleeve portion (13) for engagement of the elongate body (3). The sleeve portion (13) includes spring loaded clamp engagement means (14, 14a) intended to assume an open position in which the elongate body (3) is received in the sleeve portion (13) selectively in one of a plurality of relative engagement positions, and a closed position in which the elongate body (3) is locked with respect to the sleeve portion (13) in the selected engagement position. The engagement means (14, 14a) are associated with a slidable bush (45) resiliently urged towards a closure position of the clamp engagement means (14, 14a). The connection portion (13) is integrally formed with the sleeve portion (13). The bush (45) has stop means (55, 49) in the position corresponding to the open position of the clamp engagement means (14, 14a).

## Description

The present invention relates to a device for retaining and adjusting the tension of an elongate body, particularly a flexible control cable, with respect to a movable member, comprising a connector portion for connection to the said movable member and a sleeve portion for engagement of the elongate body, the sleeve portion including spring clamp engagement means intended to assume an open position in which the elongate body can be received in the sleeve portion selectively in one of a plurality of relative engagement positions, or a closed position in which the elongate body is locked with respect to the sleeve portion in the selected engagement position, the engagement means being associated with a slidable bush resiliently urged towards a closure position of the clamp engagement means.

A device of the type defined above is known from Italian Utility Model Application No. 54011-B/85. This device is intended in particular to allow a cable of the clutch of a vehicle to be coupled to a movable clutch-actuating member, of the type actuable upon tensioning of the cable. It comprises a plurality of elements which make it relatively complex to assemble and is moreover not very practical in use.

The main object of the invention is that of producing a device of the type indicated above which can be formed by means of a minimum number of parts, and which is particularly practical and easy to use, making it possible to reduce the costs of production and at the same time facilitate the operations for adjustment of the tension of the elongate body associated with it.

These objects are achieved thanks to the fact that the device comprises at least one of the following characteristics:
- the connection portion is formed integrally with the sleeve portion;
- the bush has stop means in the position corresponding to the open position of the clamp engagement means.

Thanks to the first of these characteristics the device according to the invention is particularly compact and strong, its dimensions being minimal in such a way that it can be received even in regions of reduced dimensions, moreover making it possible to facilitate the assembly and adjustment operations for adjusting the tension of the cable, in that during these operations the assembly of different pieces is not required.

Thanks to the second characteristic the assembly and adjustment operation by an operator is further facilitated in that it can be performed by utilising only a single hand since the stop means make it possible to maintain the bush in the position corresponding to the open position of the clamp engagement means until a position of the cable with respect to the sleeve portion which corresponds to the optimum adjustment of its tension in comparison with the movable body is achieved.

Further characteristics and advantages of the invention will become more clearly apparent from the detailed description which follows and which is provided purely by way of non-limitative example and makes reference to the attached drawings, in which:
Figure 1 is an elevational view of a device according to the invention;
Figure 2 is an elevational sectioned side view of the device of Figure 1 in the open condition of the clamp engagement means, and
Figure 3 is a view similar to Figure 2 in the closed condition of the clamp engagement means.

With reference to the Figures, the reference numeral 1 generally indicates a device having means for retaining and adjusting the tension of an elongate body according to the invention. The device 1 is in particular intended to retain the end 3 of a flexible control cable, for example of the "push-pull" type, which has a rod-like end 7 provided with a plurality of radial recesses 5 which may be annular shaped or formed by means of a fine pitch thread. The rod 7 is moreover preferably provided with an annular groove 9 for the purposes which will be clarified later in the description.

The cable 3 may in particular be a cable for the transmission of clutch-engagement movement or the selection from a selector lever unit of the gear change of a vehicle associated with the vehicle engine. However, this device can be utilised in general whenever it is necessary to provide a retaining device for an elongate body which makes it possible to perform a fine adjustment of the tension of the elongate body with respect to any movable member.

The device 1 has a portion 11 intended to be connected to the movable member, for example, in the case of a gear change cable, a pin having a spherical head (not illustrated in the drawings) mounted on a pivotable lever and projecting from the gear box unit. To the portion 11 is connected a sleeve portion 13 which defines a cylindrical internal cavity 13a for receiving the elongate body 3.

The connection portion 11 comprises, in particular, a substantially annular element 15 intended to allow it to grip the movable member, formed integrally with the sleeve portion 13.

The element 15 is lined at least on its inner surface by an insert 17 of elastically deformable material such as an elastomeric material or rubber, for example co-moulded, which defines a circular cavity 21 in which is coaxially arranged a cup-shaped body 23, preferably of metal, and fixed by co-moulding to the insert 17. From the body 23 projects a series of internal projections 29 for fixing a body 25, for example of self-lubricating plastics material, able to define a spherical seat 27 for the engagement of the spherical head of the movable member.

In the insert 17 are formed a pair of arcuate slots 19 coaxial with the seat 27, disposed transversely of the axis of the device 1 on opposite sides of the spherical seat 27 in such a way as to provide a small radial play of the seat 27 in the axial direction of the device 1 for the purpose of constituting a kind of damper device between the rigid structure of the element 15 and the seat 27 of the movable member.

From the sleeve body 13, in the opposite direction with respect to the connection portion 11, extends a plurality of pivotable spring jaws 14, for example three, constituting a clamp engagement device for the body 3. The jaws 14 are each provided with teeth 14a corresponding to the recesses 5 in such a way as to allow the engagement of these recesses in one of a plurality of relative axial positions, and terminal abutments 14b formed by radially outer projections of each of these. The jaws 14 are in particular formed in such a way as to be flexible at the end thereof where they are joined with the body 13 and in such a way that in the relaxed condition they are arranged in a configuration diverging from the axis of the sleeve portion 13.

In the intermediate part of the device 1, interposed between the connection portion 11 and the sleeve portion 13, there is formed an annular groove 31 delimited axially by a pair of circular walls 33 and 35, the wall 35 extending from a portion of the annular element 15. The groove 31 is able to receive, during the assembly phase of the body 3 with the device 1, a gripper end of a tensioning tool (not illustrated), for example a manually actuated tool, having another grip end intended to be disposed in abutment against a shoulder 41 of a disc member 39 fitted close to the end 7 of the elongate body 3 in such a way as to maintain the device 1 and the cable 3 in a close relationship with respect to one another and for application of a desired tension between these elements. After the assembly operations the disc member 39 is utilised for the support of a protective bellows 43.

A slidable bush 45 having an end collar 46 is disposed coaxially external around the sleeve portion 13. Between the collar 46 and the circular wall 33 of the body 13 there is disposed a coil spring 47 or other elastic device known per se, for the purpose of urging the bush 45 towards the jaws 14 in such a way as to interfere with these compressing them radially so as to retain the elongate body 3 between them.

On the outer part of the sleeve portion 13 there is formed a radial pin 55 intended to co-operate with a transverse seat 49 formed in the bush 45 and having a tooth 53. The seat 49 is joined to an axial slot 51 to allow access of the pin 55 to the seat 49 through it.

On the inner surface of the bush 45 there is formed an axial groove 59 aligned with the slot 51, intended to be engaged by an axial guide rib 57 which extends from the outer surface of one of the jaws 14.

The collar 46 has a plurality of radial notches 46a and/or a plurality of axial projections 46b extending from the collar 46 on the opposite side from the spring 47 to assist manual rotation of the collar 46.

In correspondence with the cavity 13a of the sleeve portion 13 there is formed an axial groove 65 within which there is a pawl 61, integral with the sleeve portion 13 and elastically pivotable in a radial direction and provided with an end tooth 63 shaped in such a way as to be able to engage the annular groove 9 of the terminal 7 of the elongate body 3. In the relaxed condition of the pawl 61 the tooth 63 extends partly into the cavity 13a and upon insertion of the end 7 re-enters into the groove 65 following a slight elastic deformation of the pawl.

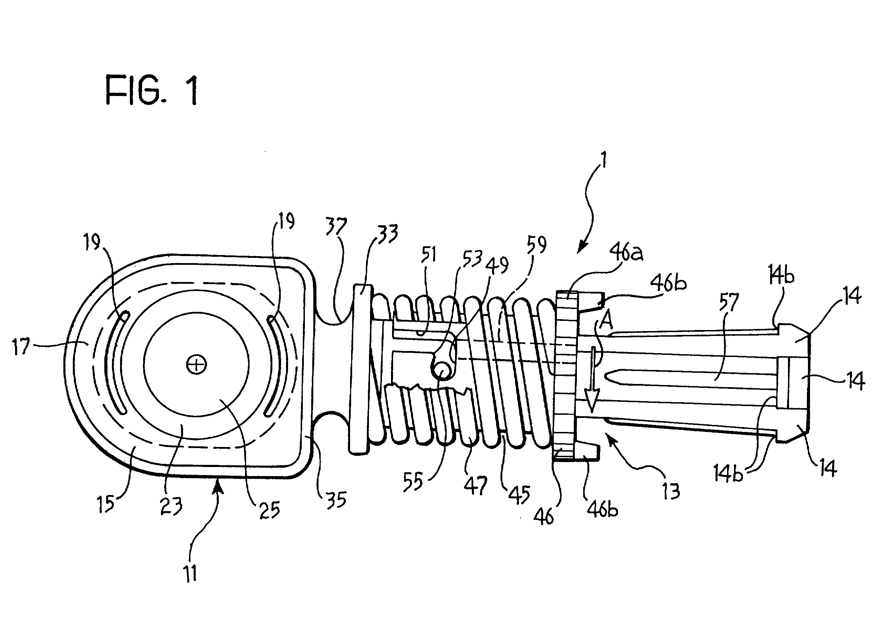

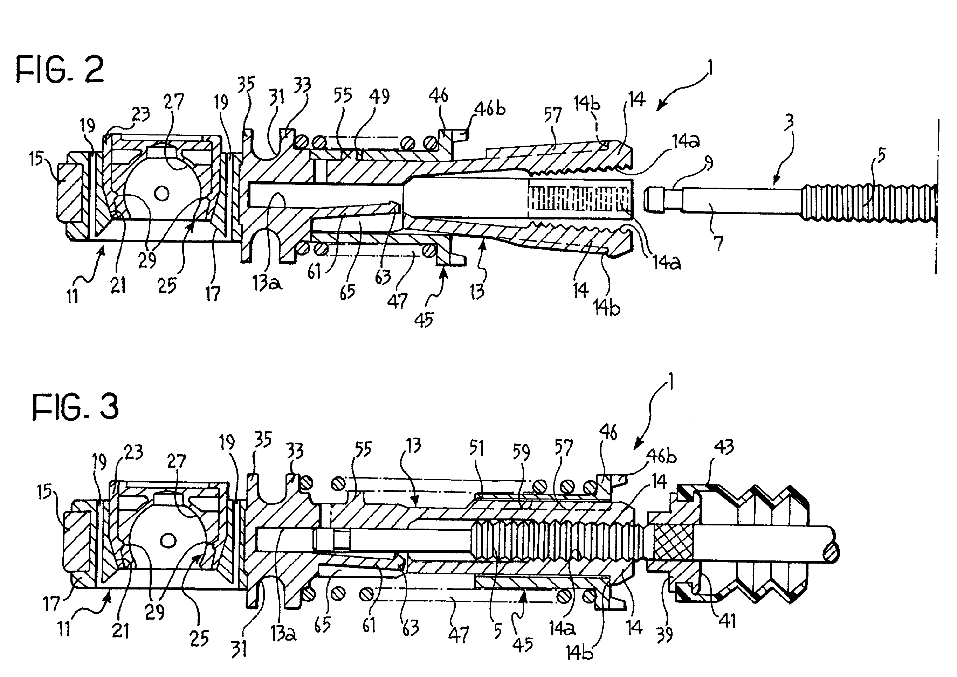

In operation, the device 1 is initially coupled to the movable member by inserting its spherical head into the spherical cavity 27 of the device 1. The end 7 of the elongate body 3 is then brought up to the device 1 and introduced axially into the cavity 13a. In these conditions the bush 45 is in the condition, as illustrated in Figures 1 and 2, adjacent to the connection portion 11 with the jaws 14 in their diverging configuration. In particular, the pin 55 is arranged into the seat 49 and the spring 47 is compressed between the collar 46 of the bush 45 and the wall 33.

Upon introduction of the end 7 into the cavity 13a, the tooth 63 of the pawl 61 is stressed elastically against the outer surface of the end 7. In this way, if the end 7, for example by accident, tends to become separated from the cavity 13a, the tooth 63 enters into the annular groove 9 axially retaining the body 3 with respect to the device 1.

Preferably a tensioning tool of type known per se is used by inserting its operating end into the groove 31 and disposing the other end in contact against the surface 41 of the disc member 39. The operating ends of the tool are then brought towards one another until reaching a desired tension of the elongate body 3 with respect to the movable member, for example by the use of a dynamometer device.

When the tension in the elongate body 3 is adjusted in the desired manner the bush 45 is caused manually to rotate in the direction indicated by the arrow A of Figure 1, utilising for this operation the notches 46a and/or the projections 46b. In this way the pin 55 passes beyond the tooth 53 and is disposed in the slot 51. In these conditions the groove 59 is aligned with the axial guide rib 57 so that the spring 47 can extend freely causing axial displacement of the bush 45 towards the jaws 14 until coming to rest against the abutment 14b.

In this position of the bush 45 the jaws 14 are compressed against the elongate member 3, and in particular their teeth 14a are engaged with the radial recesses 5 so that the body 3 is locked axially with respect to the device 1.

To effect a new adjustment of the tension of the cable 3 with respect to the movable member, or to separate the cable 3 from the device 1, the bush 45 is urged towards the connection portion 11 against the action of the spring 47. The pin 55 is received in the slot 51, the bush 45 being guided by the engagement between the rib 57 and the groove 59 until reaching the seat 49 following an opposite rotation from that indicated by the arrow A of Figure 1, after having passed beyond the tooth 53. In this condition the jaws 14 are free to diverge in such a way that the teeth 14a disengage the recesses 15 of the end 7, allowing axial displacement of the terminal of the cable 3 with respect to the cavity 13a.

## Claims

1. A connector device for retaining and adjusting the tension of an elongate body, particularly a flexible control cable, with respect to a movable member, comprising a connector portion (11) for connection to the said movable member and a sleeve portion (13) for engagement of the elongate body (3), the sleeve portion (13) including spring clamp engagement means (14, 14a) intended to assume an open position in which the elongate body (3) can be received in the sleeve portion (13) selectively in one of a plurality of relative engagement positions, or a closed position in which the elongate body (13) is locked with respect to the sleeve portion (13) in the selected engagement position, the engagement means (14, 14a) being associated with a slidable bush (45) resiliently urged towards a closure position of the clamp engagement means (14, 14a),
characterised in that it comprises at least one of the following characteristics:
- the connection portion (13) is formed integrally with the sleeve portion (13);
- the bush (45) has stop means (55, 49) in the position corresponding to the open position of the clamp engagement means (14, 14a).

2. A device according to Claim 1, characterised in that the connector portion (11) defines an annular engagement element (15) for the movable member.

3. A device according to Claim 2, characterised in that the connector portion (11) has an insert (17) of elastically deformable material such as elastomeric or like material, intended to be interposed between the annular engagement element (15) and the movable member in the coupled condition.

4. A device according to Claim 3, characterised in that the insert (17) of elastically deformable material has at least one slot (19) disposed between the annular engagement element (15) and the movable member.

5. A device according to Claim 3 or Claim 4, characterised in that the movable member has a spherical head, and in that the said insert (17) is coupled to an element (25) defining a corresponding spherical seat (27) for receiving the head of the movable member.

6. A device according to Claim 5, characterised in that between the element (25) defining the spherical seat (27) and the said insert (17) there is arranged a cup-shaped member (23) for retaining the element (25) defining the spherical seat (27).

7. A device according to any of Claims 1 to 6, characterised in that the said stop means include a pin (55) extending radially with respect to the bush (45) and a seat (49) lying transversely with respect to the sleeve portion (13) and adapted to receive the said pin (55), intended to co-operate together in the open condition of the clamp engagement means (14, 14a), one being formed on the sleeve portion (13) and the other on the bush (45), and being engagable or disengagable together upon rotation of the bush (45) with respect to the sleeve portion (13).

8. A device according to Claim 1 or Claim 7, characterised in that there are provided axial guide means (57, 59) for the bush (45) with respect to the sleeve portion (13).

9. A device according to Claim 8, characterised in that the said guide means comprise at least one radial rib (57) and a corresponding groove (59) one formed radially on one jaw (14) of the said clamp engagement means (14, 14a) and the other on the inner surface of the bush (45).

10. A device according to any of Claims 7 to 9, characterised in that the bush (45) has external handling formations (46a, 46b) for facilitating manual rotation thereof with respect to the sleeve portion (13).

11. A device according to Claim 10, characterised in that the bush (45) comprises a collar (46) provided with radial notches (46a) .

12. A device according to Claim 10 or Claim 11, characterised in that the bush (45) has a plurality of axial handling projections (46b).

13. A device according to any of Claims 1 to 12, characterised in that it comprises auxiliary means (9, 61, 63) for gripping the said elongate body (3) in the open condition of the clamp engagement means (14, 14a).

14. A device according to Claim 13, characterised in that the said auxiliary means include a resilient pawl (61) integral with the sleeve portion (13), adapted to interfere with the elongate body (3).

15. A device according to Claim 14, characterised in that the resilient pawl (61) has a radial tooth (63) facing towards the axis of the sleeve portion (13), able to be inserted into a corresponding radial seat (9) of the elongate body (3).

16. A device according to any of Claims 1 to 15, characterised in that it includes a formation (31) for insertion of a tool capable of holding the sleeve portion (13) and the elongate body (3) at a predetermined distance during the tension-adjusting operation.

17. A device according to Claim 16, characterised in that the said formation includes an annular groove (31) coaxial with the sleeve portion (13), interposed between it and the connection portion (11).
